# FASCICULE DE BREVET EUROPEEN

(11) **EP 2 181 378 B1**
(45) Date de publication et mention de la délivrance du brevet: **25.04.2012**
(21) Numéro de dépôt: 08828706.5
(22) Date de dépôt: 12.06.2008
(51) Int. Cl.: F16B 7/20, F16B 21/04

(54) **NACELLE DE TURBORÉACTEUR, DESTINÉE À ÉQUIPER UN AÉRONEF**
TRIEBWERKSGONDEL ZUM EINBAU IN EIN FLUGZEUG
JET ENGINE NACELLE INTENDED TO EQUIP AN AIRCRAFT

(30) Priorité: 20.08.2007 FR 0705917
(43) Date de publication de la demande: 05.05.2010
(73) Titulaire: Aircelle, 76700 Gonfreville l'Orcher (FR)
(72) Inventeur: SOULIER, Pascal-Marie, Paul, Marcel, F-76600 Le Havre (FR); DE SORBAY, Aurélie, F-76600 Le Havre (FR)
(74) Mandataire: Chevalier, Renaud Philippe
(86) Numéro de dépôt international: PCT/FR2008/000811
(87) Numéro de publication internationale: WO 2009/027589

(56) Documents cités:
- EP-A- 1 245 769
- FR-A- 609 573
- US-B1- 6 325 428

## Description

L'invention se rapporte à une nacelle de turboréacteur, destinée à équiper un aéronef.

Un aéronef est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

Une nacelle présente généralement une structure tubulaire comprenant une entrée d'air en avant du turboréacteur, une section médiane destinée à entourer une soufflante du turboréacteur, une section arrière pouvant abriter des moyens d'inversion de poussée et destinée à entourer la chambre de combustion du turboréacteur, et est généralement terminée par une tuyère d'éjection dont la sortie est située en aval du turboréacteur.

Les nacelles modernes sont souvent destinées à abriter un turboréacteur double flux apte à générer par l'intermédiaire des pâles de la soufflante en rotation un flux d'air chaud (également appelé flux primaire) issu de la chambre de combustion du turboréacteur.

Une nacelle présente généralement une structure externe, dite Outer Fixed Structure (OFS), qui définit, avec une structure interne concentrique, dite Inner Fixed Structure (IFS), un canal annulaire d'écoulement, encore appelé veine, visant à canaliser un flux d'air froid, dit secondaire, qui circule à l'extérieur du turboréacteur. Les flux primaire et secondaire sont éjectés du turboréacteur par l'arrière de la nacelle.

Chaque ensemble propulsif de l'avion est ainsi formé par une nacelle et un turboréacteur, et est suspendu à une structure fixe de l'avion, par exemple sous une aile ou sur le fuselage, par l'intermédiaire d'un pylône ou mât rattaché au turboréacteur ou à la nacelle.

La section arrière de la structure externe de la nacelle est usuellement formée d'une première et d'une deuxième demi-coquilles de forme sensiblement hémicylindrique, de part et d'autre d'un plan vertical longitudinal de symétrie de la nacelle, et montées mobiles de manière à pouvoir se déployer entre une position de travail et une position de maintenance en vue de donner accès au turboréacteur. Les deux demi-coquilles sont généralement montées pivotantes autour d'un axe longitudinal formant charnière en partie supérieure (à 12 heures) de l'inverseur. Les demi-coquilles sont maintenues en position de fermeture au moyen de dispositifs de verrouillage disposés au moins le long d'une ligne de jonction située en partie inférieure (à 6 heures).

De manière classique, la nacelle est équipée d'au moins un système de verrouillage conçu pour verrouiller l'une des demi-coquilles par rapport à l'autre, le système de verrouillage étant actionnable entre un état verrouillé et un état déverrouillé par l'intermédiaire d'un dispositif d'actionnement.

Le dispositif d'actionnement se présente généralement sous la forme d'une poignée reliée à une première extrémité d'une tige de commande montée déplaçable en translation par rapport à la demi-coquille correspondante, la seconde extrémité de la tige étant reliée au système d'actionnement. Le déplacement en translation de la poignée par un opérateur entraîne le déverrouillage ou le verrouillage de système de verrouillage. L'art antérieur est également illustré par le document EP-A-1245769

Une telle nacelle présente les inconvénients exposés ci-après.

Afin de s'assurer du bon verrouillage ou du bon déverrouillage du système de verrouillage, il est nécessaire de déplacer la poignée sur la totalité de sa course.

Il existe un risque qu'un opérateur déplace la poignée en translation sur une partie seulement de la course de la poignée, de sorte que le système de verrouillage n'est pas correctement actionné.

Ceci peut avoir des répercussions durant le vol, lorsque le verrouillage du système de verrouillage n'est pas correctement assuré. En outre, en cas de déverrouillage incomplet du système de verrouillage, la nacelle risque d'être endommagée lors des opérations de maintenance durant lesquels les deux demi-coquilles sont écartées l'une de l'autre.

Un autre dispositif d'actionnement connu comporte une tige déplaçable uniquement en rotation. Ce type de dispositif d'actionnement nécessite généralement une précharge de la part de l'opérateur afin d'actionner le système de verrouillage. Lorsqu'un tel dispositif est appliqué à un système de verrouillage ne nécessitant pas de précharge, l'opérateur peut considérer que la nacelle présente un défaut de verrouillage et que, en conséquence, il est nécessaire d'effectuer des vérifications additionnelles.

L'invention vise à remédier à ces inconvénients en proposant une nacelle permettant un actionnement plus sûr du système de verrouillage.

A cet effet, l'invention concerne une nacelle de turboréacteur du type précité, caractérisée en ce que le dispositif d'actionnement comporte un corps fixe dans lequel une tige d'actionnement est montée déplaçable en translation et en rotation par rapport à son axe longitudinal, la tige présentant une première extrémité équipée d'une poignée et une seconde extrémité reliée au système de verrouillage, le corps fixe comportant une piste coopérant avec un élément suiveur faisant saillie de la tige, la piste présentant une partie médiane s'étendant parallèlement à l'axe de la tige, de part et d'autre de laquelle sont ménagées respectivement une première et une seconde parties d'extrémité s'étendant sensiblement perpendiculairement à l'axe de la tige.

Ainsi, l'actionnement du système de verrouillage est réalisé par la succession des étapes suivantes. Tout d'abord l'opérateur fait pivoter la poignée selon un angle déterminé-puis il exerce une traction sur la poignée. Enfin, il fait à nouveau pivoter la poignée selon un angle déterminée. La translation de la poignée et donc de la tige d'actionnement assure de manière classique l'actionnement du système de verrouillage, le pivotement de la poignée en fin et en début de course de la tige permet de s'assurer que la totalité de la course de la tige a été parcourue. En outre, lorsque un mouvement de pivotement est effectué en début ou en fin de course de la tige, c'est-à-dire lorsque l'élément suiveur coopère avec l'une des parties d'extrémité de la piste disposées perpendiculairement à l'axe de la tige, celle-ci est maintenue en position. C'est ainsi que, par exemple, la tige ne risque pas d'être déplacée sous l'effet de la gravité.

Selon une caractéristique de l'invention, le dispositif d'actionnement comporte des moyens de blocage de la tige, actionnables alternativement entre une position de verrouillage dans laquelle le mouvement de la tige est empêchée et une position de déverrouillage dans laquelle le mouvement de rotation de la tige est autorisé.

De cette manière, lorsque le doigt suiveur est correctement positionné dans l'une des parties d'extrémité de la piste, il est nécessaire à un opérateur d'actionner au préalable les moyens de blocage avant de pouvoir faire pivoter puis déplacer en translation la poignée. Ceci permet encore d'augmenter la sécurité de la nacelle.

Avantageusement, les moyens de blocage comportent une première douille montée coulissante sur la tige, entre une position de verrouillage et une position de déverrouillage, une seconde douille étant montée sur la première douille et étant fixe par rapport à la tige, la seconde douille comportant au moins une ouverture dans laquelle au moins un élément de couplage est monté de manière mobile, l'élément de couplage étant déplaçable alternativement entre une position de couplage de la seconde douille et du corps lorsque la première douille est en position de verrouillage, et une position de découplage de la seconde douille et du corps lorsque la première douille est en position de déverrouillage.

Ainsi, afin de réaliser le déverrouillage en rotation de la tige, l'opérateur doit d'abord déplacer la première douille en position de déverrouillage de manière à ce que l'élément de couplage ne réalise pas le couplage en rotation de la seconde douille et du corps fixe. Dans le cas contraire, si la première douille est en position de verrouillage, la seconde douille, qui est fixe par rapport à la tige, et liée en rotation au corps fixe. De cette manière, la tige ne peut être pivotée et, par conséquent, le système de verrouillage ne peut être actionné.

Selon une possibilité de l'invention, l'élément de couplage est maintenu dans l'ouverture de la seconde douille et conçu pour coopérer avec au moins un logement complémentaire ménagé dans le corps de manière à réaliser le couplage en rotation de la seconde douille et du corps, la première douille comportant un renfoncement, disposé en regard de l'élément de couplage lorsque la première douille est en position de déverrouillage, et écarté de l'élément de couplage lorsque la première douille est en position de verrouillage, l'élément de couplage étant logé, au moins en partie, dans le renfoncement lors du déplacement de la première douille en position de déverrouillage de manière à se dégager du logement ménagé dans le corps, l'élément de couplage étant dégagé du renfoncement lors du déplacement de la première douille en position de verrouillage de manière à venir s'engager dans le logement ménagé dans le corps.

Avantageusement, l'élément de couplage est une bille.

Préférentiellement, la première douille comporte une poignée additionnelle, au niveau de son extrémité tournée vers la poignée équipant la tige.

Selon une caractéristique de l'invention, le dispositif d'actionnement comporte des moyens de rappel conçus pour déplacer la première douille en position de verrouillage.

Cette caractéristique vise encore à augmenter la sécurité de la nacelle.

Avantageusement, le corps comporte un premier et un second logements complémentaires conçus pour coopérer avec la bille respectivement dans une première et une seconde positions de la tige dans lesquelles respectivement l'élément suiveur coopère avec la première et la seconde parties de la piste s'étendant sensiblement perpendiculairement à l'axe de la tige.

De cette manière, le blocage en rotation de la tige est possible en début et en fin de course de cette dernière, c'est-à-dire lorsque le dispositif de verrouillage est totalement verrouillé ou déverrouillé.

Préférentiellement, le corps comporte une partie externe et une partie interne reliées fixement l'une à l'autre, la partie interne étant montée sur la seconde douille.

Cette caractéristique permet de faciliter la réalisation du corps. En effet, la réalisation du corps doit tenir compte des tolérances de fabrication pratiquées habituellement dans le domaine de l'aéronautique. La séparation en deux parties du corps permet de satisfaire ces exigences tout en permettant la réalisation simple du corps. En effet, il est alors possible de réaliser une partie externe, n'ayant pas de fonction mécanique de guidage et n'ayant pas de fonction de maintien de l'élément de couplage, avec des tolérances de fabrication importantes, seule la partie interne destinée au guidage de la tige étant réalisée avec des tolérances faibles et dans un matériau qui peut être différent.

Selon une possibilité de l'invention, la première douille est équipée d'une bague de visualisation conçue pour être visible à un opérateur lorsque la première douille est en position déverrouillée et conçue pour être non visible lorsque la première douille est en position verrouillée.

L'invention concerne en outre un aéronef équipé d'une nacelle selon l'invention.

De toute façon, l'invention sera bien comprise à l'aide de la description qui suit, en référence au dessin schématique annexé représentant, à titre d'exemple, une forme de réalisation de cette nacelle.
Figure 1 est une vue schématique d'une nacelle, en coupe longitudinale ;
Figure 2 est une vue éclatée, en perspective, de la section arrière de la nacelle ;
Figure 3 est une vue de face d'une partie du dispositif d'actionnement ;
Figure 4 est une vue correspondant à la figure 3, dans laquelle la seconde douille est également représentée ;
Figure 5 est une vue correspondant à la figure 4, dans laquelle la partie interne du corps est également représentée ;
Figure 6 est une vue correspondant à la figure 5, dans laquelle la première douille est déplacée en position de déverrouillage ;
Figure 7 est une vue de face de la partie externe du corps ;
Figure 8 est une vue correspondant à la figure 5, dans laquelle la tige est déplacée ;
Figure 9 représente les étapes successives de la cinématique du dispositif d'actionnement ;

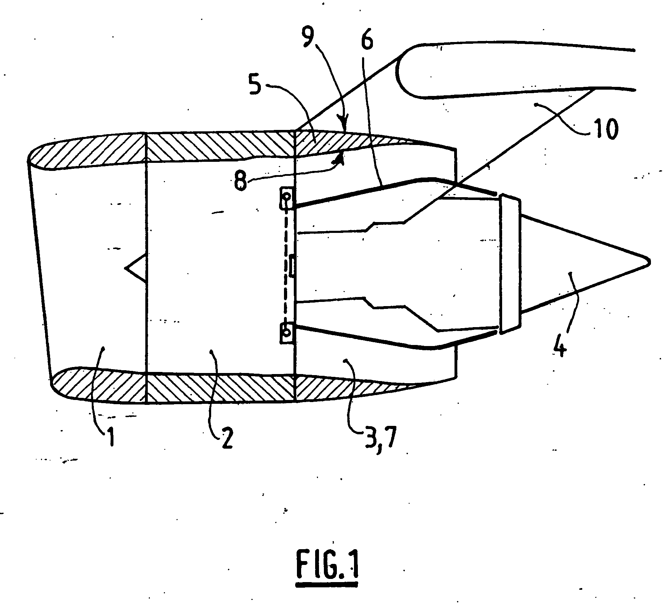

La figure 1 représente une nacelle selon l'invention, destinée à équiper un aéronef. Celle-ci présente une structure tubulaire comprenant une entrée d'air 1 en avant du turboréacteur, une section médiane 2 destinée à entourer une soufflante du turboréacteur, une section arrière 3 pouvant abriter des moyens d'inversion de poussée et destinée à entourer la chambre de combustion du turboréacteur, et est terminée par une tuyère d'éjection 4 dont la sortie est située en aval du turboréacteur.

La nacelle est destinée à abriter un turboréacteur double flux apte à générer, par l'intermédiaire des pâles de la soufflante en rotation, un flux d'air chaud (également appelé flux primaire) issu de la chambre de combustion du turboréacteur.

La nacelle présente une structure externe 5, dite Outer Fixed Structure (OFS), qui définit, avec une structure interne concentrique 6, dite Inner Fixed Structure (IFS), un canal annulaire d'écoulement 7, encore appelé veine, visant à canaliser un flux d'air froid, dit secondaire, qui circule à l'extérieur du turboréacteur. Les flux primaire et secondaire sont éjectés du turboréacteur par l'arrière de la nacelle.

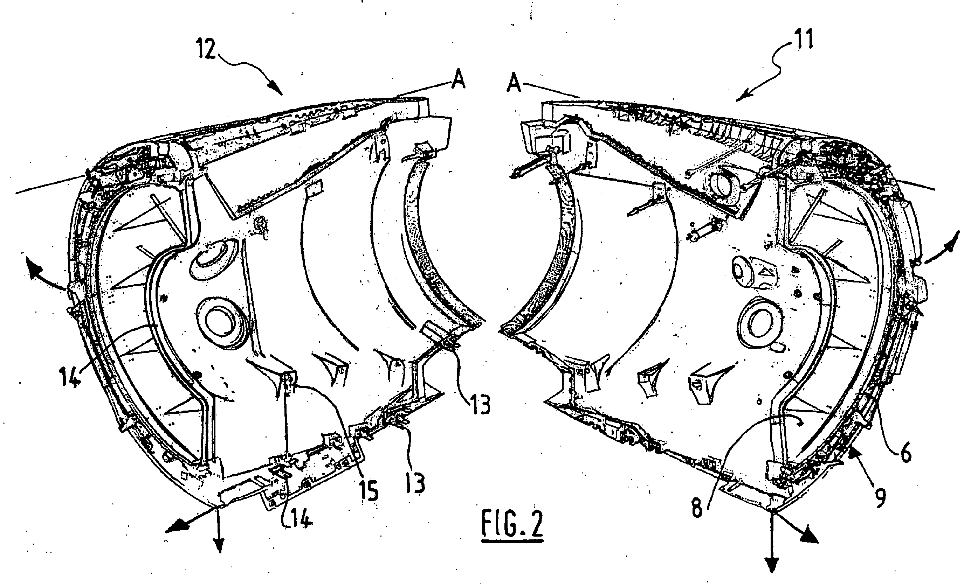

Comme cela apparaît plus particulièrement à la figure 2, la structure externe 5 comporte un capot interne 8 et un capot externe 9.

Chaque ensemble propulsif de l'aéronef est ainsi formé par une nacelle et un turboréacteur, et est suspendu à une structure fixe de l'aéronef, par exemple sous une aile ou sur le fuselage, par l'intermédiaire d'un pylône ou mât 10 rattaché au turboréacteur ou à la nacelle.

Comme cela apparaît à la figure 2, la section arrière 5 de la structure externe de la nacelle est formée d'une première et d'une deuxième demi-coquilles 11, 12 de forme sensiblement hémicylindrique, de part et d'autre d'un plan vertical longitudinal de symétrie de la nacelle, et montées mobiles par rapport au mat de manière à pouvoir se déployer entre une position de travail et une position de maintenance en vue de donner accès au turboréacteur. Les deux demi-coquilles 11, 12 sont chacune montées pivotantes autour d'un axe A, formant charnière en partie supérieure (à 12 heures) de l'inverseur. Les demi-coquilles sont maintenues en position de fermeture au moyen de dispositifs de verrouillage 13 disposés le long d'une ligne de jonction située en partie inférieure (à 6 heures) et en partie inférieure (à 12 heures). Les dispositifs de verrouillage sont actionnés par l'intermédiaire d'un dispositif de verrouillage.

L'invention vise un type particulier de dispositif de verrouillage dont la position est illustrée en figure 2 par la référence 14, visant à actionner un système de verrouillage 15 disposé à distance par rapport au capot externe de la nacelle et dont la poignée en position verrouillée ne dépasse pas de la surface externe de la nacelle.

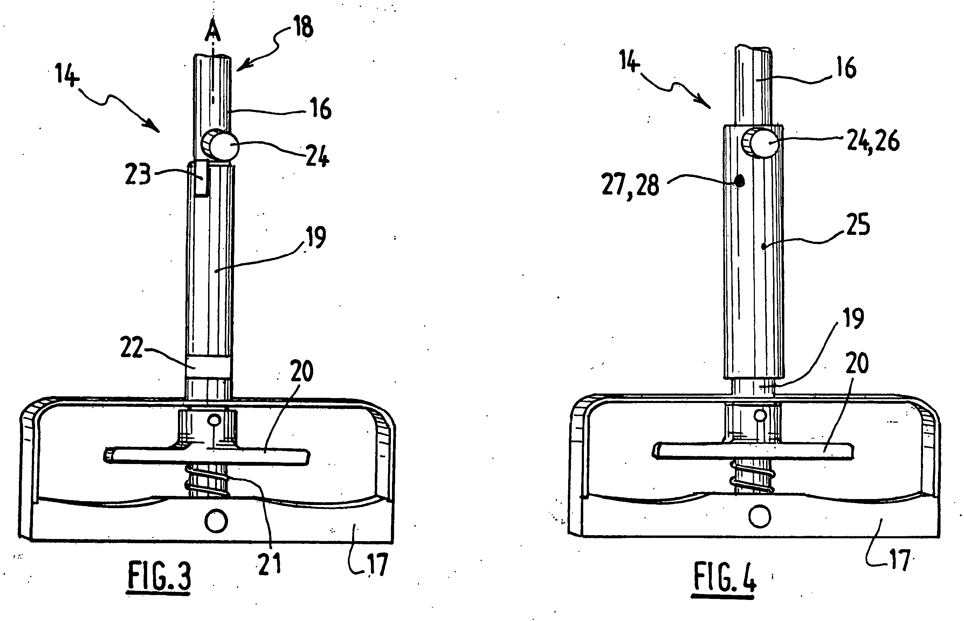

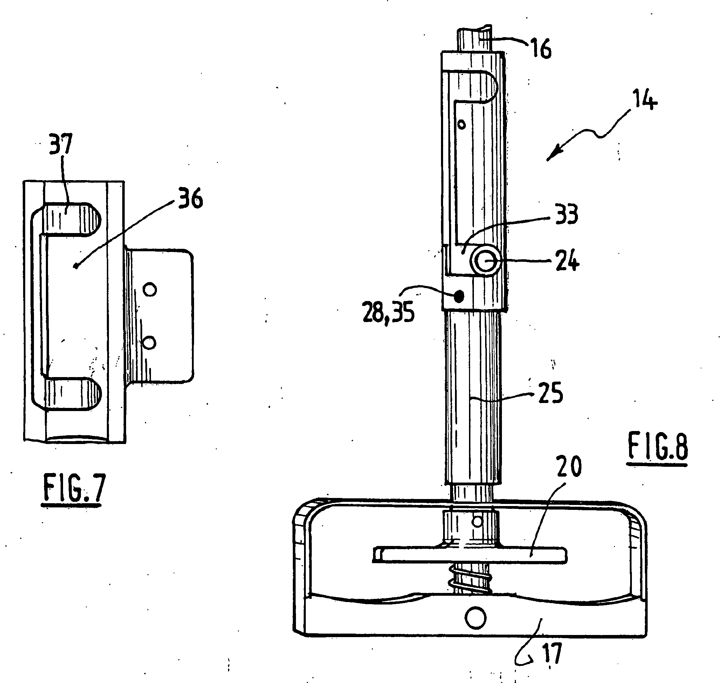

La structure du dispositif de verrouillage selon l'invention va maintenant être décrite en référence aux figures 3 à 8.

Une partie du dispositif de verrouillage 14 est représentée en figure 3. Celui-ci comporte une tige d'actionnement 16 présentant une première. extrémité équipée d'une poignée 17 de forme générale rectangulaire, et une seconde extrémité 18 reliée au système de verrouillage 15, comme cela est connu en soi de l'homme du métier.

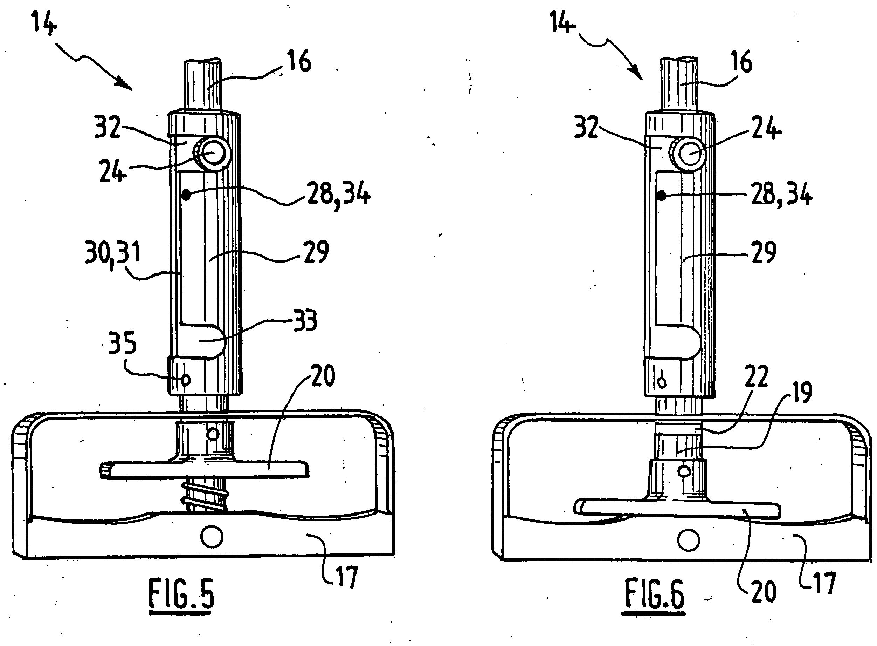

Une première douille 19 est montée coulissante sur la tige 16, entre une position de verrouillage représentée notamment à la figure 3, et une position de déverrouillage, représentée à la figure 6.

La première douille 19 comporte une première extrémité équipée d'une poignée additionnelle 20 en forme générale de T. La première extrémité de la première douille 19 traverse la poignée 17 au niveau d'une ouverture de celle-ci, la poignée additionnelle 20 étant disposée dans le rectangle délimité par la poignée 17.

La position de la poignée additionnelle 20 ainsi que sa forme permettent à un opérateur de pouvoir saisir de manière ergonomique à la fois la poignée 17 et la poignée additionnelle 20.

Un ressort hélicoïdal de rappel 21 est disposé autour de la tige 16 et prend appui d'une part contre la première extrémité de la première douille 19 et d'autre part contre la poignée 17 de sorte qu'il contraint la première douille 19 à se déplacer en position de verrouillage.

La première douille 19 comporte en outre, à proximité de la première extrémité, une bague de visualisation 22 de couleur rouge dont la fonction est détaillée ci-après.

La seconde extrémité de la première douille 19 comporte un renfoncement ou une rampe 23 s'étendant longitudinalement et incliné radialement vers l'axe A de la tige en direction de la seconde extrémité de la douille.

La tige 16 est équipée d'un doigt suiveur 24 faisant saillie vers l'extérieur.

Comme cela est représenté à la figure 4, le dispositif d'actionnement 14 comporte une seconde douille 25 montée sur la première douille 19 et comportant une ouverture 26 traversée par le doigt suiveur 24 de manière à relier fixement la seconde douille 25 à la tige 16.

La seconde douille 25 comporte une première extrémité tournée du côté de la poignée 17 et en retrait de celle-ci. La seconde douille 25 est positionnée de manière à ce que sa première extrémité recouvre la bague de visualisation 22 lorsque la première douille 19 est en position verrouillée. La seconde douille 25 comporte une seconde extrémité, en retrait de laquelle est ménagée une ouverture 27 formant un logement pour une bille 28. La bille 28 est montée de manière mobile dans l'ouverture 2 7, entre une position de verrouillage et une position de déverrouillage, comme cela est mieux détaillé ci-après.

L'ouverture 27 est disposée selon l'axe du renfoncement 23 de sorte que, en position de déverrouillage de la première douille 19, la bille 28 soit disposée en regard du renfoncement 23 de manière à pouvoir y être insérée, au moins en partie, et de manière à ce qu'en position de verrouillage de la première douille 19, la bille 28 soit écartée du renfoncement 23 ou soit en appui contre la partie du renfoncement 23 présentant un enfoncement minimal par rapport à la surface externe de la première douille 19, étant rappelé que le renfoncement 23 est incliné vers la seconde extrémité de la douille 19 précitée.

Le diamètre de la bille 28 est ajusté de sorte que, lorsque la première douille 19 est déplacée en position de verrouillage, la bille 28 est déplacée en position de verrouillage dans laquelle elle fait saillie hors de le seconde douille 25. En outre, lorsque la première douille 19 est déplacée en position de déverrouillage, la bille 28 est également déplacée en position de déverrouillage, dans laquelle elle est logée dans l'ouverture 27 et/ou dans le renfoncement 23. Dans cette position, la bille 28 ne fait par conséquent plus saillie de la seconde douille 28.

Une partie interne 29 d'un corps fixe est monté sur la seconde douille 25, la partie interne 29 comportant une piste 30 présentant une partie médiane 31 formée par une ouverture longitudinale aux extrémités de laquelle s'étendent deux ouvertures 32, 33 disposées perpendiculairement à la partie médiane, formant ainsi une première et une seconde parties d'extrémité 32, 33 de la piste 30.

La piste 30 présente ainsi une ouverture en forme générale de C et comportant trois parties successives 31 à 33, à l'intérieur de laquelle s'étend le doigt suiveur 24.

La partie interne 29 du corps comporte en outre un premier et un second logements 34, 35 conçus pour coopérer avec la bille 28 respectivement dans une première et une seconde positions de la tige 16 dans lesquelles respectivement l'élément suiveur 24 coopère avec la première et la seconde parties d'extrémité 32, 33 de la piste 30.

Le corps comporte en outre une partie externe fixe 36 montée sur la partie interne 29 et présentant une piste 37 similaire à celle de la partie interne 29, disposée en regard de celle-ci, le doigt suiveur 24 s'étendant également dans la piste 37 de la partie externe 36. La partie interne 29 du corps est reliée fixement à la partie externe 36 par l'intermédiaire d'une goupille non représentée.

Le fonctionnement du dispositif d'actionnement 14 va maintenant être décrit plus en détail, à l'aide des figures 5 à 9.

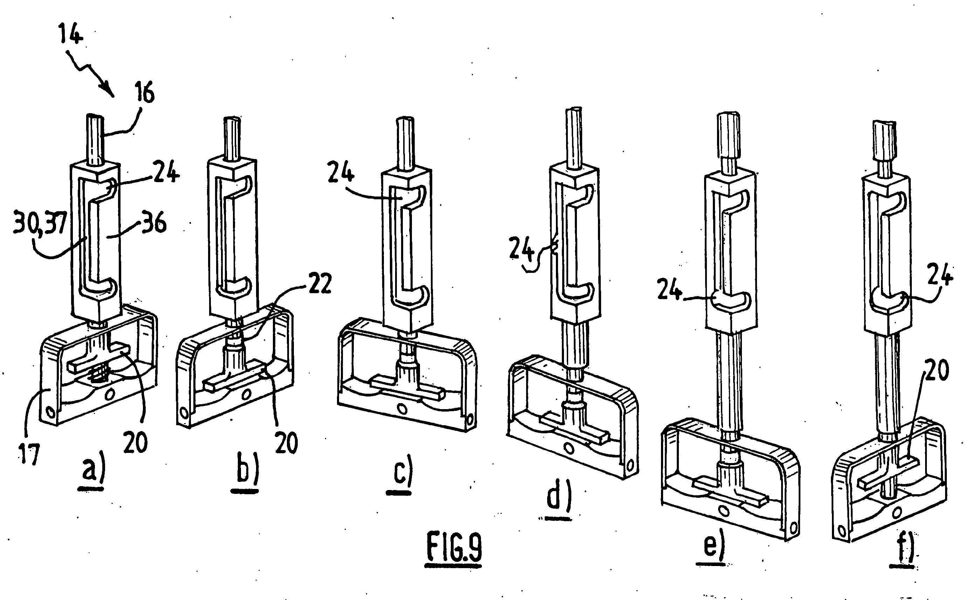

Plus particulièrement, la figure 9 représente plusieurs positions successives du dispositif d'actionnement 14.

Dans une position de verrouillage du système de verrouillage 15 représentée à la figure 9a, la tige 16 et la poignée 17 sont disposées en position haute, le doigt suiveur 24 étant disposé en fond de piste 30 au niveau de la première partie d'extrémité 32 de celle-ci.

Dans cette position, le ressort de rappel 21 maintient la première douille 19 en position de verrouillage de sorte que la bille 28 est maintenue en position de verrouillage, dans laquelle elle est insérée en partie dans le premier logement 34 de la partie interne 29 du corps. La bille 28 permet donc de coupler en rotation la partie interne 29 du corps avec la seconde douille 25, elle-même fixée à la tige 16. La partie interne 29 étant fixe, la tige 16 l'est également et l'opérateur ne peut pas faire pivoter la poignée 17. Comme vu précédemment, dans cette position, la bague de visualisation 22 est recouverte par la seconde douille 25 et n'est, par conséquent, pas visible par l'opérateur.

A partir de cette position, lorsque l'opérateur souhaite déverrouiller le système de verrouillage 15, il exerce tout d'abord une traction sur la poignée additionnelle 20 de manière à déplacer la première douille 19 en position de déverrouillage. Dans cette position représentée à la figure 9b, la bille 28 peut être déplacée en position de déverrouillage dans laquelle elle est dégagée du premier logement 34 de la partie interne 29 du corps, de sorte que cette partie interne 29 n'est plus couplée en rotation à la seconde douille 25. Dans cette position, la bague de visualisation 22 de la première douille 25 est visible et l'opérateur peut faire pivoter la tige 16 de manière à ce que le doigt suiveur 24 traverse la première partie d'extrémité 32 des pistes 30, 37 du corps, comme cela apparaît à la figure 9c.

L'opérateur exerce ensuite une traction sur la poignée 17 de sorte que la tige 16 et le doigt suiveur 24 sont déplacés vers le bas, comme représenté à la figure 9d, jusqu'à atteindre l'extrémité basse de la partie médiane 31 des pistes 30, 37. Dans cette position représentée à la figure 9e, le système de verrouillage 15 est alors complètement déverrouillé.

L'opérateur fait ensuite pivoter la poignée 17 de sorte que l'élément suiveur 24 traverse la seconde partie d'extrémité 33 des pistes 30, 37 du corps jusqu'à atteindre le fond correspondant de la piste 30.

Dans cette position représentée à la figure 9f, la bille 28 est disposée en regard du second logement 35 de la partie interne 29 du corps. Ainsi, lorsque l'opérateur relâche la poignée additionnelle 20, le ressort de rappel 21 contraint la première douille 19 à se déplacer vers le haut, c'est-à-dire en position de verrouillage, de sorte que la bille 28 est également déplacée en position de verrouillage dans laquelle elle est introduite partiellement dans le seconde logement 35 de la partie interne 29, de manière à coupler en rotation cette partie interne 29 et la seconde douille 25. Dans cette position, la rotation de la tige 16 est à nouveau empêchée. En outre, dans cette position, la bague 22 n'est plus visible par l'opérateur, lui indiquant ainsi que le mouvement de la poignée a bien été effectué complètement de manière à actionner le système de verrouillage.

A partir de cette position, le verrouillage du système de verrouillage 15 est obtenu en réalisant la succession inverse des étapes précitées.

Comme il va de soi l'invention ne se limite pas à la seule forme de réalisation de cette nacelle de turboréacteur, décrite ci-dessus à titre d'exemple, mais elle embrasse au contraire toutes les variantes couvertes par le texte des revendications.

## Revendications

1. Nacelle de turboréacteur, destinée à équiper un aéronef, formée à partir d'au moins une première et une seconde demi-coquilles (11, 12) et équipée d'au moins un système de verrouillage (15) conçu pour verrouiller l'une des demi-coquilles (11) par rapport à l'autre (12), le système de verrouillage étant actionnable entre un état verrouillé et un état déverrouillé par l'intermédiaire d'un dispositif d'actionnement (14), **caractérisée en ce que** le dispositif d'actionnement (14) comporte un corps fixe (29, 36) dans lequel une tige d'actionnement (16) est montée déplaçable en translation et en rotation par rapport à son axe longitudinal (A), la tige (16) présentant une première extrémité équipée d'une poignée (17) et une seconde extrémité (18) reliée au système de verrouillage (15), le corps fixe (29, 36) comportant une piste (30, 37) coopérant avec un élément suiveur (24) faisant saillie de la tige (16), la piste (30, 37) présentant une partie médiane (31) s'étendant parallèlement à l'axe (A) de la tige (16), de part et d'autre de laquelle sont ménagées respectivement une première et une seconde parties d'extrémité (32, 33) s'étendant sensiblement perpendiculairement à l'axe (A) de la tige (16).

2. Nacelle selon la revendication 1, **caractérisée en ce que** le dispositif d'actionnement (14) comporte des moyens de blocage (20) de la tige, actionnables alternativement entre une position de verrouillage dans laquelle le mouvement de la tige (16) est empêchée et une position de déverrouillage dans laquelle le mouvement de rotation de la tige (16) est autorisé.

3. Nacelle selon la revendication 2, **caractérisée en ce que** les moyens de blocage comportent une première douille (19) montée coulissante sur la tige (16), entre une position de verrouillage et une position de déverrouillage, une seconde douille (25) étant montée sur la première douille (19) et étant fixe par rapport à la tige (16), la seconde douille (25) comportant au moins une ouverture (27) dans laquelle au moins un élément de couplage (28) est monté de manière mobile, l'élément de couplage (28) étant déplaçable alternativement entre une position de couplage de la seconde douille (25) et du corps (29, 36) lorsque la première douille (19) est en position de verrouillage, et une position de découplage de la seconde douille (25) et du corps (29, 36) lorsque la première douille (19) est en position de déverrouillage.

4. Nacelle selon la revendication 3, **caractérisée en ce que** l'élément de couplage est maintenu dans l'ouverture (27) de la seconde douille (25) et conçu pour coopérer avec au moins un logement complémentaire (34, 35) ménagé dans le corps (29) de manière à réaliser le couplage en rotation de la seconde douille (25) et du corps (29, 36), la première douille (19) comportant un renfoncement (23), disposé en regard de l'élément de couplage (28) lorsque la première douille (19) est en position de déverrouillage, et écarté de l'élément de couplage (28) lorsque la première douille (19) est en position de verrouillage, l'élément de couplage (28) étant logé, au moins en partie, dans le renfoncement (23) lors du déplacement de la première douille (19) en position de déverrouillage de manière à se dégager du logement (34, 35) ménagé dans le corps (29), l'élément de couplage (28) étant dégagé du renfoncement (23) lors du déplacement de la première douille (19) en position de verrouillage de manière à venir s'engager dans le logement (34, 35) ménagé dans le corps (29).

5. Nacelle selon la revendication 4, **caractérisée en ce que** l'élément de couplage est une bille (28).

6. Nacelle selon l'une des revendications 3 à 5, **caractérisée en ce que** la première douille (19) comporte une poignée additionnelle (20), au niveau de son extrémité tournée vers la poignée (17) équipant la tige (16).

7. Nacelle selon l'une des revendications 3 à 6, **caractérisée en ce que** le dispositif d'actionnement (14) comporte des moyens de rappel (21) conçus pour déplacer la première douille (19) en position de verrouillage.

8. Nacelle selon l'une des revendications 4 à 7, **caractérisée en ce que** le corps (29) comporte un premier et un second logements complémentaires (34, 35) conçus pour coopérer avec la bille (28) respectivement dans une première et une seconde positions de la tige (16) dans lesquelles respectivement l'élément suiveur (24) coopère avec la première et la seconde parties (32, 33) de la piste (30) s'étendant sensiblement perpendiculairement à l'axe (A) de la tige (16).

9. Nacelle selon l'une des revendications 3 à 8, **caractérisée en ce que** le corps comporte une partie externe (36) une partie interne (29) reliées fixement l'une à l'autre, la partie interne (29) étant montée sur la seconde douille (25).

10. Nacelle selon l'une des revendications 3 à 9, **caractérisée en ce que** la première douille (19) est équipée d'une bague de visualisation (22) conçue pour être visible à un opérateur lorsque la première douille (19) est en position déverrouillée et conçue pour être non visible lorsque la première douille (19) est en position verrouillée.

11. Aéronef équipé d'une nacelle selon l'une des revendications 1 à 10.

## Claims

1. A nacelle for a turbojet engine intended to equip an aircraft, and formed from at least a first and a second half-shell (11, 12) and equipped with at least one locking system (15) designed to lock one of the half-shells (11) relative to the other (12), it being possible for the locking system to be actuated between a locked state and an unlocked state using an actuating device (14), **characterized in that** the actuating device (14) comprises a fixed body (29, 36) in which an actuating rod (16) is mounted such that it can be moved translationally and rotationally with respect to its longitudinal axis (A), the rod (16) having a first end equipped with a handle (17) and a second end (18) connected to the locking system (15), the fixed body (29, 36) comprising a track (30, 37) collaborating with a follower element (24) that projects from the rod (16), the track (30, 37) having a middle part (31) running parallel to the axis (A) of the rod (16), on each side of which there are respectively formed a first and a second end part (32, 33) running substantially perpendicular to the axis (A) of the rod (16).

2. The nacelle as claimed in claim 1, **characterized in that** the actuating device (14) comprises means (20) of immobilizing the rod, it being possible for these to be actuated alternately between a locked position in which the rod (16) is prevented from moving and an unlocked position in which the rod (16) can be rotated.

3. The nacelle as claimed in claim 2, **characterized in that** the immobilizing means comprise a first sleeve (19) slidably mounted on the rod (16) between a locked position and an unlocked position, a second sleeve (25) being mounted on the first sleeve (19) and being fixed relative to the rod (16), the second sleeve (25) comprising at least one opening (27) in which at least one coupling element (28) is mounted such that it can move, it being possible for the coupling element (28) to be moved alternately between a position in which it couples the second sleeve (25) and the body (29, 36) when the first sleeve (19) is in the locked position, and a position in which it uncouples the second sleeve (25) and the body (29, 36) when the first sleeve (19) is in the unlocked position.

4. The nacelle as claimed in claim 3, **characterized in that** the coupling element is held in the opening (27) of the second sleeve (25) and is designed to collaborate with at least one complementary housing (34, 35) formed in the body (29) in such a way as to couple the second sleeve (25) and the body (29, 36) in terms of rotation, the first sleeve (19) comprising an indentation (23) positioned facing the coupling element (28) when the first sleeve (19) is in the unlocked position, and distanced from the coupling element (28) when the first sleeve (19) is in the locked position, the coupling element (28) being housed, at least partially, in the indentation (23) when the first sleeve (19) moves into the unlocked position so as to break free from the housing (34, 35) formed in the body (29), the coupling element (28) being freed from the indentation (23) as the first sleeve (19) moves into the locked position so as to engage in the housing (34, 35) formed in the body (29).

5. The nacelle as claimed in claim 4, **characterized in that** the coupling element is a ball (28).

6. The nacelle as claimed in one of claims 3 to 5, **characterized in that** the first sleeve (19) comprises an additional handle (20) at that one of its ends that faces toward the handle (17) with which the rod (16) is equipped.

7. The nacelle as claimed in one of claims 3 to 6, **characterized in that** the actuating device (14) comprises return means (21) designed to move the first sleeve (19) into the locked position.

8. The nacelle as claimed in one of claims 4 to 7, **characterized in that** the body (29) comprises a first and a second housing (34, 35) that complement one another and are designed to collaborate with the ball (28) when the rod (16) is respectively in a first and in a second position, in which positions the follower element (24) collaborates respectively with the first and second parts (32, 33) of the track (30) which run substantially perpendicular to the axis (A) of the rod (16).

9. The nacelle as claimed in one of claims 3 to 8, **characterized in that** the body comprises an outer part (36) and an inner part (29) which are fixedly joined together, the inner part (29) being mounted on the second sleeve (25).

10. The nacelle as claimed in one of claims 3 to 9, **characterized in that** the first sleeve (19) is equipped with an indicator ring (22) designed to be visible to an operator when the first sleeve (19) is in the unlocked position and designed not to be visible when the first sleeve (19) is in the locked position.

11. An aircraft equipped with a nacelle as claimed in one of claims 1 to 10.

## Patentansprüche

1. Turbotriebswerksgondel, die dazu bestimmt ist, ein Luftfahrzeug auszustatten, die von mindestens einer ersten und einer zweiten Halbschale (11, 12) gebildet wird und mit mindestens einem Verriegelungssystem (15) ausgestattet ist, das ausgebildet ist, um eine der Halbschalen (11) im Verhältnis zur anderen (12) zu verriegeln, wobei das Verriegelungssystem über eine Betätigungsvorrichtung (14) zwischen einem verriegelten Zustand und einem entriegelten Zustand betätigbar ist, **dadurch gekennzeichnet, dass** die Betätigungsvorrichtung (14) einen festen Körper (29, 36) aufweist, in den eine Betätigungsstange (16) im Verhältnis zu ihrer Längsachse (A) verschiebend und rotierend bewegbar montiert ist, wobei die Stange (16) erstes Ende, das mit einem Griff (17) ausgestattet ist, und ein zweites Ende (18), das mit dem Verriegelungssystem (15) verbunden ist, aufweist, wobei der feste Körper (29, 36) einen Weg (30, 37) aufweist, der mit einem Führungselement (24) zusammenarbeitet, das aus der Stange (16) hervorragt, wobei der Weg (30, 37) einen mittleren Abschnitt (31) aufweist, der sich parallel zur Achse (A) der Stange (16) erstreckt, wobei auf dessen einen und anderen Seite jeweils ein erster und ein zweiter Endabschnitt (32, 33) ausgebildet sind, die sich etwa parallel zur Achse (A) der Stange (16) erstrecken.

2. Gondel nach Anspruch 1, **dadurch gekennzeichnet, dass** die Betätigungsvorrichtung (14) Blockiermittel (20) der Stange aufweist, die alternativ zwischen einer Verriegelungsstellung, in der die Bewegung der Stange (16) verhindert wird, und einer Entriegelungsstellung, in der die Rotationsbewegung der Stange (16) gestattet ist, betätigbar sind.

3. Gondel nach Anspruch 2, **dadurch gekennzeichnet, dass** die Blockiermittel eine erste Hülse (19) aufweisen, die zwischen einer Verriegelungsstellung und einer Entriegelungsstellung gleitend auf der Stange (16) montiert ist, wobei eine zweite Hülse (25) auf der ersten Hülse (19) montiert ist und im Verhältnis zur Stange (16) fest ist, wobei die zweite Hülse (25) mindestens eine Öffnung (27) aufweist, in der mindestens ein Kopplungselement (28) bewegbar montiert ist, wobei das Kopplungselement (28) alternativ zwischen einer Kopplungsstellung der zweiten Hülse (25) und dem Körper (29, 36), wenn die erste Hülse (19) in Verriegelungsstellung ist, und einer Entkopplungsstellung der zweiten Hülse (25) und dem Körper (29, 36), wenn die erste Hülse (19) in Entriegelungsstellung ist, verschiebbar ist.

4. Gondel nach Anspruch 3, **dadurch gekennzeichnet, dass** das Kopplungselement in der Öffnung (27) der zweiten Hülse (25) gehalten wird und ausgebildet ist, um mit mindestens einer komplementären Aufnahme (34, 35) zusammenzuarbeiten, die derart in den Körper (29) eingearbeitet ist, dass die Rotationskopplung der zweiten Hülse (25) und des Körpers (29, 36) durchgeführt wird, wobei die erste Hülse (19) eine Verstärkung (23) aufweist, die gegenüber dem Kopplungselement (28) angeordnet ist, wenn die erste Hülse (19) in Entriegelungsstellung ist, und vom Kopplungselement (28) beabstandet, wenn die erste Hülse (19) in Verriegelungsstellung ist, wobei das Kopplungselement (28) während der Verschiebung der ersten Hülse (19) in Entriegelungsstellung zumindest teilweise derart in der Verstärkung (23) untergebracht ist, dass es sich aus der in den Körper (29) eingearbeiteten Aufnahme (34, 35) löst, wobei das Kopplungselement (28) während der Verschiebung der ersten Hülse (19) in Verriegelungsstellung derart aus der Verstärkung (23) gelöst wird, dass es in die in den Körper (29) eingearbeitete Aufnahme (34, 35) eingreift.

5. Gondel nach Anspruch 4, **dadurch gekennzeichnet, dass** das Kopplungselement eine Kugel (28) ist.

6. Gondel nach einem der Ansprüche 3 bis 5, **dadurch gekennzeichnet, dass** die erste Hülse (19) auf Ebene seines Endes, das dem Griff (17) zugewandt ist, der die Stange (16) ausstattet, einen zusätzlichen Griff (20) aufweist.

7. Gondel nach einem der Ansprüche 3 bis 6, **dadurch gekennzeichnet, dass** die Betätigungsvorrichtung (14) Rückholmittel (21) aufweist, die ausgebildet sind, um die erste Hülse (19) in Verriegelungsstellung zu verschieben.

8. Gondel nach einem der Ansprüche 4 bis 7, **dadurch gekennzeichnet, dass** der Körper (29) eine erste und eine zweite komplementäre Aufnahme (34, 35) aufweist, die ausgebildet sind, um mit der Kugel (28) jeweils in einer ersten und einer zweiten Stellung der Stange (16) zusammenzuarbeiten, in denen jeweils das Führungselement (24) mit dem ersten und zweiten Abschnitt (32, 33) des Wegs (30) zusammenarbeitet, der sich etwa senkrecht zur Achse (A) der Stange (16) erstreckt.

9. Gondel nach einem der Ansprüche 3 bis 8, **dadurch gekennzeichnet, dass** der Körper einen äußeren Abschnitt (36) und einen inneren Abschnitt (29) aufweist, die miteinander fest verbunden sind, wobei der innere Abschnitt (29) auf der zweiten Hülse (25) montiert ist.

10. Gondel nach einem der Ansprüche 3 bis 9, **dadurch gekennzeichnet, dass** die erste Hülse (19) mit einem Visualisierungsring (22) ausgestattet ist, der ausgebildet ist, um für einen Bediener sichtbar zu sein, wenn sich die erste Hülse (19) in entriegelter Stellung befindet und der ausgebildet ist, um nicht sichtbar zu sein, wenn sich die erste Hülse (19) in verriegelter Stellung befindet.

11. Luftfahrzeug, das mit einer Gondel nach einem der Ansprüche 1 bis 10 ausgestattet ist.
